Europäisches Patentamt

European Patent Office

Office européen des brevets

(19)

(11) Veröffentlichungsnummer: **0 132 724**
B1

(12) **EUROPÄISCHE PATENTSCHRIFT**

(45) Veröffentlichungstag der Patentschrift:
10.01.90

(51) Int. Cl.⁴: **G 06 K 19/08,** G 03 H 1/04

(21) Anmeldenummer: 84108255.5

(22) Anmeldetag: 13.07.84

(54) Verfahren und Vorrichtung zur Aufnahme und Wiedergabe von Hologrammen.

(30) Priorität: 29.07.83 DE 3327463

(43) Veröffentlichungstag der Anmeldung:
13.02.85 Patentblatt 85/7

(45) Bekanntmachung des Hinweises auf die Patenterteilung:
10.01.90 Patentblatt 90/2

(84) Benannte Vertragsstaaten:
AT BE CH DE FR GB IT LI LU NL SE

(56) Entgegenhaltungen:
DE-A- 2 007 187
DE-A- 2 840 556
US-A- 3 620 590
US-A- 3 647 275

(73) Patentinhaber: Rubenberger, Karl, Dall'Arml-Strasse 5,
D-8058 Erding (DE)

(72) Erfinder: Dausmann, Günther, Dipl.-Ing,
Schlachthausstrasse 9, D-8058 Erding (DE)

(74) Vertreter: Lorenz, Eduard et al, Rechtsanwälte Lorenz,
Eduard - Seidler, Bernhard Seidler, Margrit - Gossel,
Hans-K. Philipps, Ina, Dr. Widenmayerstrasse 23,
D-8000 München 22 (DE)

**Beschreibung**

Die Erfindung betrifft ein Verfahren zur Aufnahme und Wiedergabe von Fotografien mit einem der Fotografie in der fotografischen Trägerschicht überlagerten Hologramm nach dem Oberbegriff des Patentanspruchs 1.

Bei einem aus der DE-PS 2 840 556 bekannten Verfahren dieser Art wird lediglich einer normal sichtbaren Fotografie ein Hologramm überlagert, das beliebige Informationen enthalten kann, die optisch mit einem Referenzstrahl sichtbar gemacht oder aber auch maschinell ausgelesen und ausgewertet werden können. Dieses bekannte Verfahren gewährleistet beispielsweise, wenn die Fotografie als Fotografie für einen Ausweis oder ein Berechtigungspapier verwendet wird, eine hohe Fälschungssicherheit, weil sich das der Fotografie überlagerte Hologramm in der Praxis nur dann herstellen lassen wird, wenn dem Fälscher die für das Original verwendeten Aufnahmegeräte zur Verfügung stehen. Andererseits ist die in dem Hologramm gespeicherte Information für den potentiellen Fälscher ohne weiteres ersichtlich, so daß er, wenn er das erforderliche Know-how und die notwendigen Geräte besitzt, eine Fälschung vornehmen könnte. Eine Fälschung wird dann wesentlich erschwert, wenn die holografisch codierte Information für den potentiellen Fälscher überhaupt nicht lesbar oder wahrnehmbar oder wenn mehrere Hologramme einander in einer Weise überlagert sind, daß diese von einem Fälscher nicht mehr nachahmbar sind.

Bei einem aus der Veröffentlichung US-A-3 647 275 bekannten Verfahren zur Aufnahme verzerrter Hologramme wird in den Referenzstrahl oder den Objektstrahl ein beliebige Phasenstörungen verursachendes Phasenobjekt, beispielsweise eine Mattscheibe, angeordnet, so daß das Objekt in der Hologrammebene auf dem fotografischen Material entsprechend verzerrt aufgezeichnet wird. Um die verzerrte Hologramminformation auslesen zu können, wird bei der Rekonstruktion dasselbe die Verzerrungen bewirkende Phasenobjekt in den Referenzstrahl angeordnet. Die bei der Aufnahme des Hologramms bewirkten Verzerrungen werden also bei der Rekonstruktion durch dasselbe Phasenobjekt eliminiert, das zuvor diese Phasenverzerrungen bewirkt hatte.

Aufgabe der Erfindung ist es daher, in eine Fotografie oder dergleichen gespeicherte Hologramminformation in derart verzerrter oder überlagerter Form abzuspeichern, daß Fälschungen oder Reproduktionen praktisch ausgeschlossen sind.

Erfindungsgemäß wird diese Aufgabe durch ein Verfahren und eine Vorrichtung gemäß Patentanspruch 1 bzw. Patentanspruch 15 gelöst.

Bei dem erfindungsgemäßen Verfahren können diese vorbestimmten Phasenstörungen derart sein, daß diese eine zweite Hologramminformation darstellen, die einmal zu einer Verzerrung der in der Aperturblende enthaltenen Hologramminformation führt, so daß bei üblicher Reproduktion des Hologramms mit einem Referenzstrahl die Hologramminformation der Aperturblende nicht ohne weiteres sichtbar wird. Zum anderen kann durch nachstehend noch angegebene Maßnahmen die in den Phasenstörungen enthaltene zweite Hologramminformation getrennt ausgelesen werden. In jedem Fall führt die Überlagerung zweier Hologramminformationen zu einer sehr komplizierten Codierung der Hologramminformationen, so daß eine Fälschung nahezu ausgeschlossen erscheint.

Zu berücksichtigen ist allerdings, daß die Aufnahme der Fotografie dann verschlechtert werden kann, wenn das die vorbestimmten Phasenstörungen erzeugende Phasenobjekt mit der zweiten Hologramminformation im Bereich der Aperturblende angeordnet wird, weil dort Phasenobjekte die Abbildung auf der Ausgangsluke beeinträchtigen können. Es ist daher zweckmäßig, das die vorbestimmten Phasenstörungen erzeugende Phasenobjekt im Bereich der Hologrammebene anzuordnen, wenn nicht vor die Abbildungsoptik ein komplementäre Phasenstörungen erzeugendes Phasenobjekt angeordnet wird, das Teil der Abbildungsoptik für die abzubildende Fotografie ist.

Um die Abbildungsoptik für die Fotografie durch die Phasenobjekte für das Hologramm nicht zu beeinträchtigen, ist es auch möglich, die komplementäre Phasenstörungen erzeugenden Phasenobjekte, die sich zusammen als eine Linse interpretieren lassen, beidseits der Aperturblende anzuordnen.

Da in dem nach dem erfindungsgemäßen Verfahren aufgenommenen Hologramm zwei einander überlagerte Hologramminformationen gespeichert sind, ist es ein weiteres Ziel der Erfindung, beide Informationen getrennt, d.h. ohne daß die eine die andere stört, auslesen oder auswerten zu können. In weiterer Ausgestaltung der Erfindung kann die in der Aperturblende gespeicherte erste Phaseninformation dadurch unabhängig von den von dem Phasenobjekt verursachten Phasenstörungen ausgelesen oder ausgewertet werden, wenn bei der Rekonstruktion in die rekonstruierte Objektwelle ein Phasenobjekt angeordnet wird, das sich mit dem bei der Hologrammaufnahme verwendeten Phasenobjekt zu einer Abbildungsoptik ergänzt. Nach diesem Verfahren läßt sich ein reelles oder virtuelles scharfes Bild der ersten Hologramminformation erzeugen.

Die erste Hologramminformation läßt sich nach einer anderen Ausgestaltung der Erfindung auch dadurch störungsfrei auswerten und auslesen, daß das Phasenobjekt aus einem mit einem Relief versehenen, Brechungen erzeugenden Körper, beispielsweise einem Glaskörper, besteht, der sich durch einen entsprechend komplementären, Brechungen erzeugenden Körper zu einem Element, beispielsweise einer Linse, der Abbildungsoptik ergänzen läßt. Durch diese Ausgestaltung läßt sich die in dem Phasenobjekt gespeicherte zweite Hologramminformation bei der Reproduktion ebenfalls vollständig eliminieren.

Die erfindungsgemäß verwendeten Phasenobjekte können auch aus verschiedenen Fresnel'-

schen Zonenplatten, die zusammengesetzt werden, oder Phasenhologrammen bestehen.

Bei Phasenhologrammen ist die Hologramminformation in dem Interferenzgitter gespeichert. Diese Hologramminformation beeinflußt auch die Amplituden, die die Helligkeit beeinflussen. Das Interferenzmuster des Phasenhologramms enthält also das gesamte rekonstruierbare Hologramm. Die Helligkeitsverteilung ergibt sich aus der in dem Interferenzmuster gespeicherten Phasenverschiebung, so daß bei der Reproduktion des Phasenhologramms auch die Amplitudenstörungen wieder erscheinen.

Neben den Phasenhologrammen gibt es auch Amplitudenhologramme, bei denen die Helligkeitsunterschiede ebenfalls durch Phasenverschiebungen erzeugt werden. Das Hologramm ist bei den Amplitudenhologrammen aber nicht in einem Brechungsgitter gespeichert, sondern in einem ebenen Amplitudengitter, das die Phasenverschiebungen durch Beugungen an den Amplitudenstörungskanten erzeugt. Während das Phasenhologramm aufgrund der Gangunterschiede in dem Interferenzgitter entsteht, wird das Amplitudenhologramm durch Beugungserscheinungen an den Amplitudenstörungskanten erzeugt.

Eine Hologramminformation kann also sowohl in dem Interferenzgitter eines Phasenhologramms als auch in dem Amplitudengitter eines Amplitudenhologramms gespeichert sein.

In Weiterbildung der Erfindung ist vorgesehen, daß das bei der Aufnahme verwendete Phasenobjekt nicht nur der Verzerrung der ersten Hologramminformation dient, sondern selbst eine zweite Hologramminformation enthält.

Um auch diese zweite Hologramminformation in weiterer Ausgestaltung der Erfindung unabhängig von der ersten in der Aperturblende enthaltenen Hologramminformation lesbar und auswertbar zu machen, ist nach einer erfinderischen Weiterbildung vorgesehen, daß bei der Rekonstruktion des Hologramms durch ein zu der Aperturblende komplementäres Phasenobjekt die erste Hologramminformation eliminiert und nur die in dem bei der Aufnahme verwendeten Phasenobjekt gespeicherte Information sichtbar gemacht oder ausgewertet wird. Dieses komplementäre Phasenobjekt kann wiederum aus einem Phasenhologramm oder einem Brechungen erzeugenden Körper, beispielsweise aus Glas oder Kunststoff, bestehen.

Aufgrund der vorstehenden Ausführungen ist klar, daß das als «Phasenobjekt» bezeichnete Objekt nicht ein reines Phasenobjekt sein muß.

Unter einem reinen Phasenobjekt ist ein Objekt zu verstehen, das nur die Phase beeinflußt, also zu einer Phasenverschiebung führt und somit zumindest vorübergehend die örtlichen Kohärenzbedingungen aufhebt. Derartige Phasenobjekte können aus Objekten (aus Glas oder Kunststoff) bestehen, die den Lichtstrahl brechen, also beim Durchgang durch das Objekt zu Gangunterschieden führen. Es ist jedoch zu berücksichtigen, daß sich auch Amplitudenobjekte auf die Phase auswirken können, beispielsweise durch Beugung an Störungsübergängen, wie sie beispielsweise durch Lochraster verursacht werden. Unter einem reinen Amplitudenobjekt kann ein Objekt verstanden werden, das die Phase nicht beeinflußt, sondern nur die Amplitude, also beispielsweise ausgehend von einem Laserstrahl die Amplituden verkleinert und somit zu einer Abdunkelung des Bildes führt, ohne daß Störungsübergänge vorhanden sind, an denen Beugungen auftreten könnten.

Es gibt somit Objekte, die nur als Amplitudenobjekte wirken, also keine Beugungen verursachen, Objekte, die nur als Phasenobjekte wirken, also ideal transparent sind, und Objekte, die sowohl als Amplituden- und Phasenobjekte wirken.

Schließlich ist es in Weiterbildung der Erfindung möglich, eine dritte Information dadurch in den einander überlagerten Hologrammen abzuspeichern, daß beide Hologramminformationen derart aufeinander abgestimmt sind, daß sie sich bei ihrer Reproduktion zu einem Bild oder einem Muster mit vorbestimmtem Informationsinhalt ergänzen.

Das erfindungsgemäße Verfahren läßt sich auch dadurch ausführen, daß das Phasenobjekt oder das Amplitudenobjekt in dem Referenzstrahl, vorzugsweise im Bereich der Hologrammebene, angeordnet wird.

Gerade bei der Herstellung fälschungssicherer Legitimationspapiere kann es in Weiterbildung der Erfindung zweckmäßig sein, daß mindestens eine der Hologramminformationen ein von einem Rechner erzeugtes Hologramm ist, das über einen Sensor und einen Rechner wieder auslesbar ist. Derartige Hologramminformationen werden rechnergesteuert in bekannter Weise dadurch hergestellt, daß per Programm nach einem vorgegebenen Muster ein Interferenzmuster hergestellt wird, dessen typischen Werte in das Hologramm in der Weise codiert werden, daß es durch einen vom Rechner simulierten Referenzstrahl wieder ausgelesen werden kann.

Das von dem Rechner erzeugte Hologramm kann auch optisch auswertbar ausgebildet sein.

In weiterer Ausgestaltung der Erfindung ist vorgesehen, daß mindestens eine der Hologramminformationen durch ein auf die Trägerschicht aufgestempeltes Hologramm abänderbar oder auslöschbar ist. Diese Ausgestaltung der Erfindung ist insbesondere dann wichtig, wenn aufgrund nach der Ausstellung beispielsweise eines Legitimationspapiers oder dergleichen eingetretener Veränderungen neue Informationen in dieses Papier eingespeichert werden müssen.

Eine Weiterbildung sieht vor, daß eine der in dem Hologramm codierten Information entsprechende Information in einem zusätzlichen Informationsträger gespeichert ist, um auf einfache Weise einen Echtheitsvergleich zu ermöglichen. Dieser zusätzliche Informationsträger kann ein üblicher Magnetstreifen oder aber auch optisch auswertbare Bitmuster sein.

Die nach dem erfindungsgemäßen Verfahren abgespeicherten Hologramme können räumlicher Natur sein. Dies ermöglicht es, die Auswertung der abgespeicherten Hologramme in mehreren Ebenen vorzunehmen, so daß die Lage dieser Ebenen ein zusätzliches Echtheitskriterium ist.

Ausführungsbeispiele der Erfindung werden nachstehend anhand der Zeichnung näher erläutert. In dieser zeigt

Fig. 1 eine schematische Darstellung einer Anordnung zur Aufnahme eines Hologramms mit verzerrter Hologramminformation,

Fig. 2 eine schematische Darstellung einer Anordnung zur Rekonstruktion des mit der Anordnung nach Fig. 1 aufgenommenen Hologramms,

Fig. 3 eine schematische Darstellung einer Anordnung zur Aufnahme eines Transmissionshologramms mit verschlüsselter zD Information (4).

Fig. 4 eine schematische Darstellung einer Anordnung zur Aufnahme eines Hologramms mit verschlüsselter Hologramminformation,

Fig. 5 eine schematische Darstellung zur Rekonstruktion des mit der Anordnung nach Fig. 4 aufgenommenen Hologramms,

Fig. 6 eine schematische Darstellung zur Aufnahme eines der Entzerrung dienenden Hologramms und des dazugehörenden Gegenstückes sowie

Fig. 7 eine schematische Darstellung einer Anordnung zur Rekonstruktion des gemäß Fig. 6 aufgenommenen Hologramms.

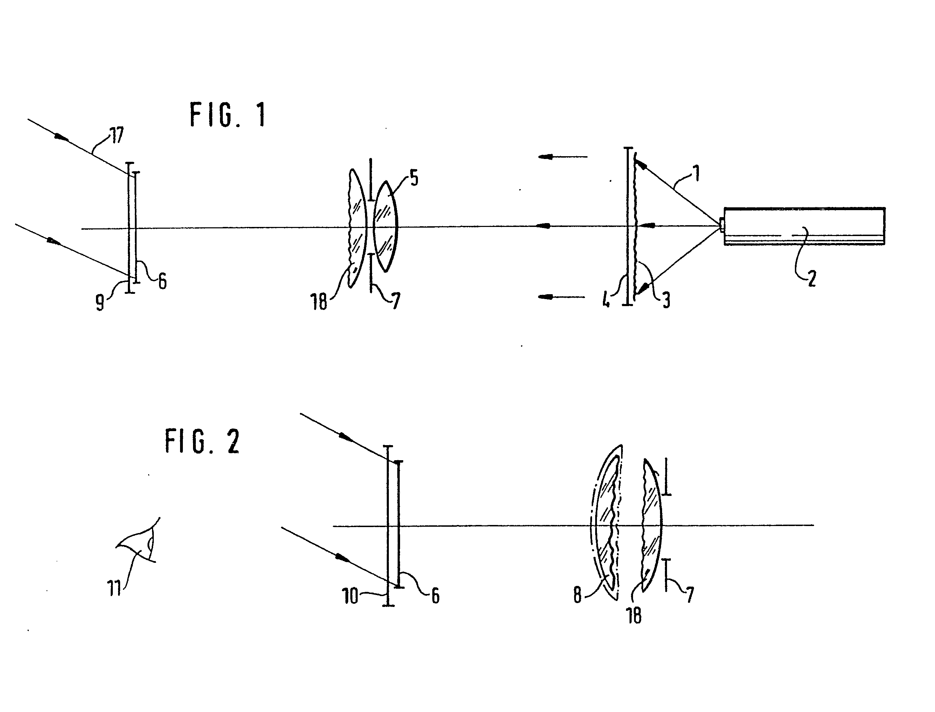

Bei der Anordnung nach Fig. 1 erzeugt der Laser 2 einen Laserstrahl 1, der in der unmittelbar nachgeschalteten Aufweitungsoptik divergierend aufgeweitet wird. Der aufgeweitete Laserstrahl 1 trifft auf den Diffusor 3, der wie eine Feldlinse wirken kann. In der die Eintrittsluke des optischen Systems bildenden Ebene ist beispielsweise ein Dia 4 angeordnet, das Amplitudenstörungen in dem Objektstrahl verursacht. Der Objektstrahl tritt durch die Abbildungsoptik 5 und die Aperturblende 7, die in Form einer Amplitudenstörung die Hologramminformation enthalten kann. Zwischen der Aperturblende 7 und der Hologrammebene 6 ist ein Phasenobjekt 18 angeordnet, das natürlich auch zusätzliche Amplitudenstörungen bewirken kann. Der durch dieses Phasenobjekt 18 tretende Objektstrahl wird verzerrt und trifft in verzerrter Form auf die Hologrammebene 6.

Von dem Laserstrahl 1 ist in bekannter und daher nicht dargestellter Form der Referenzstrahl 17 abgespalten worden. Dieser Referenzstrahl 17 trifft in der dargestellten Weise auf die Hologrammebene 6. Aufgrund der Interferenz des Objektstrahls mit dem Referenzstrahl wird in der Hologrammebene 6 auf dem fotografischen Material das Hologramm aufgezeichnet, und zwar sowohl die Amplitudeninformation 4 als auch die Hologramminformation in der Aperturblende 7. Aufgrund des Phasenobjekts 18 wird das Hologramm in verzerrter Form aufgezeichnet.

In Fig. 1 ist eine Alternative dargestellt, bei der statt der Amplitudeninformation 4 im Objektstrahl die Amplitudeninformation 9 in den Referenzstrahl gelegt ist. In dieser Alternative erfolgt eine verzerrungsfreie Aufzeichnung der Amplitudenstörungen, während nur die Hologramminformation 7 durch das Phasenobjekt 18 verschlüsselt aufgezeichnet wird.

Bei der ersten Alternative entfällt also die Amplitudeninformation 9, während bei der zweiten Alternative sich keine Amplitudeninformation 4 im Objektstrahl befindet. Es ist jedoch auch das Vorhandensein von 4 und 9 gleichzeitig möglich.

Anhand der Fig. 2 wird nun die Rekonstruktion der nach Fig. 1 aufgenommenen Hologramme und deren Entschlüsselung erläutert.

Ohne die Entschlüsselungsoptik 8 und die diese erzeugende Trägerschicht 10 würde für das Auge 11 ein virtuelles Bild des Phasenobjekts 18 und der durch dieses verzerrten Information in der Aperturblende 7 entstehen.

Um lesbare Bilder zu erhalten, muß ein optisches Element 8 vorgesehen werden, das das Phasenobjekt 18 zu einer Linse der Abbildungsoptik ergänzt. Dies könnte durch ein komplementäres Linsenteil 8 geschehen, erfolgt aber einfacher durch ein optisches Element 10, das die Wirkung eines komplementären Linsenteils 8 hat. Dieses optische Element 10 ist ein entsprechend komplementäres Hologramm.

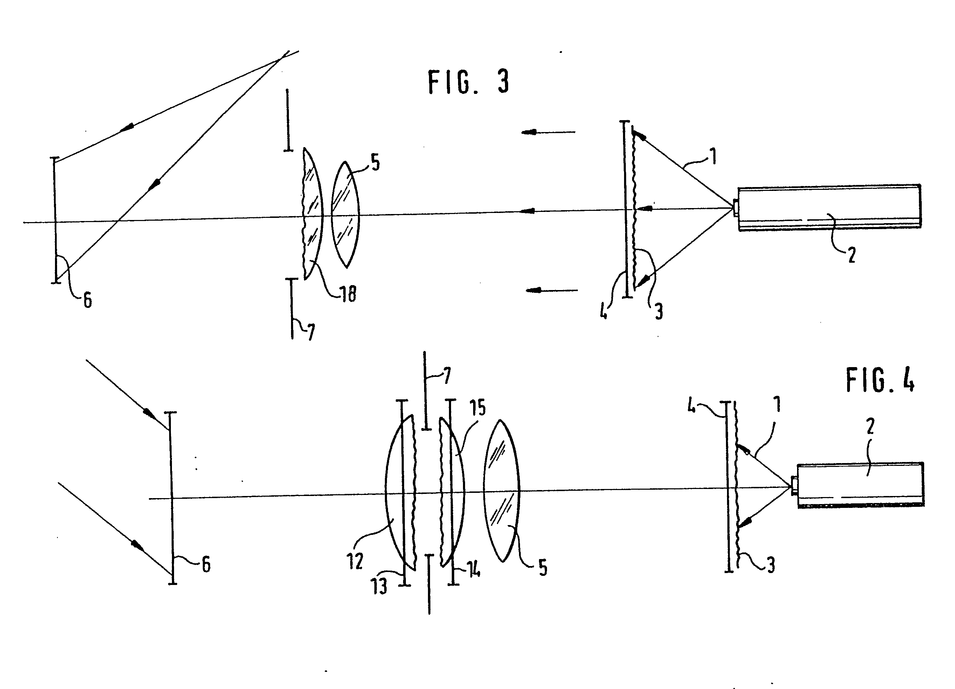

Bei dem Ausführungsbeispiel nach Fig. 3 erfolgt die Aufnahme des Hologramms als Transmissionshologramm.

Grundsätzlich ist zwischen Reflektionshologrammen und Transmissionshologrammen zu unterscheiden. Reflexionshologramme sind beispielsweise Lippmann-Bragg-Hologramme, die mit Weißlicht rekonstruiert werden können, weil verschiedene Ebenen in dem Hologramm vorhanden sind, die die nicht zur Rekonstruktion benötigten Wellenlängen herausfiltern. Derartige sogenannte Weißlichthologramme erfüllen die Kohärenzbedingungen für sich selbst, so daß bei inkohärentem Licht mit der betreffenden Wellenlänge das Hologramm rekonstruiert werden kann. Für die praktische Anwendung sind daher derartige Reflexionshologramme am häufigsten.

Bei Transmissionshologrammen gelten für jede Wellenlänge besondere Beugungsbedingungen, so daß sich eine Vielzahl von z.T. unbrauchbaren Bildern ergibt und die Erfassung des Hologramms, das den Kohärenzbedingungen genügt, schwierig ist. Bei den sogenannten Regenbogenhologrammen wird diese Schwierigkeit umgangen.

Das Transmissionshologramm nach Fig. 3 wird dadurch aufgenommen, daß sich der in nicht dargestellter Weise von dem Objektstrahl abgespaltene Referenzstrahl und der Objektstrahl auf der gleichen Seite der Hologrammebene 6 befinden.

Das Phasenobjekt 18 ist vor der Aperturblende 7 mit der Hologramminformation angeordnet, so daß in der Hologrammebene 6 ein Hologramm aufgenommen wird, das das Amplitudenobjekt 4 durch das Phasenobjekt 18 verzerrt enthält. Die Hologramminformation 7 kann aus dem in der Hologrammebene 6 aufgenommenen Hologramm jedoch normal sichtbar rekonstruiert werden.

Linsen können durch übliche konvexe oder konkave Glaskörper gebildet sein, aber auch durch Fresnel'sche Zonenplatten. Fresnel'sche Zonenplatten kann man sich durch Hologramme aufgebaut denken, die zusammen die gleiche Wirkung haben. Bei derartigen optischen Elementen wird das Interferenzgitter also nicht zur Rekonstruktion eines Hologramms benutzt, sondern zur Erzeugung der Wirkung von Linsen.

Bei dem Ausführungsbeispiel nach Fig. 4 wird die Amplitudenstörung 4 auf der Hologrammebene 6 normal sichtbar abgebildet, während die Hologramminformation 7 wegen des optischen Bauteils 12, 13 verzerrt erscheint. Die optischen Bauteile 13, 14 sind Hologramme, die zusammen eine Linse der Abbildungsoptik bilden, so daß das Amplitudenobjekt 4 fotografisch richtig erscheint. Die Hologramminformation 7 ist jedoch durch das optische Bauteil 13 verzerrt aufgezeichnet.

Die Rekonstruktion des gemäß Anordnung nach Fig. 4 aufgenommenen Hologramms erfolgt entsprechend der anhand der Fig. 2 beschriebenen Anordnung.

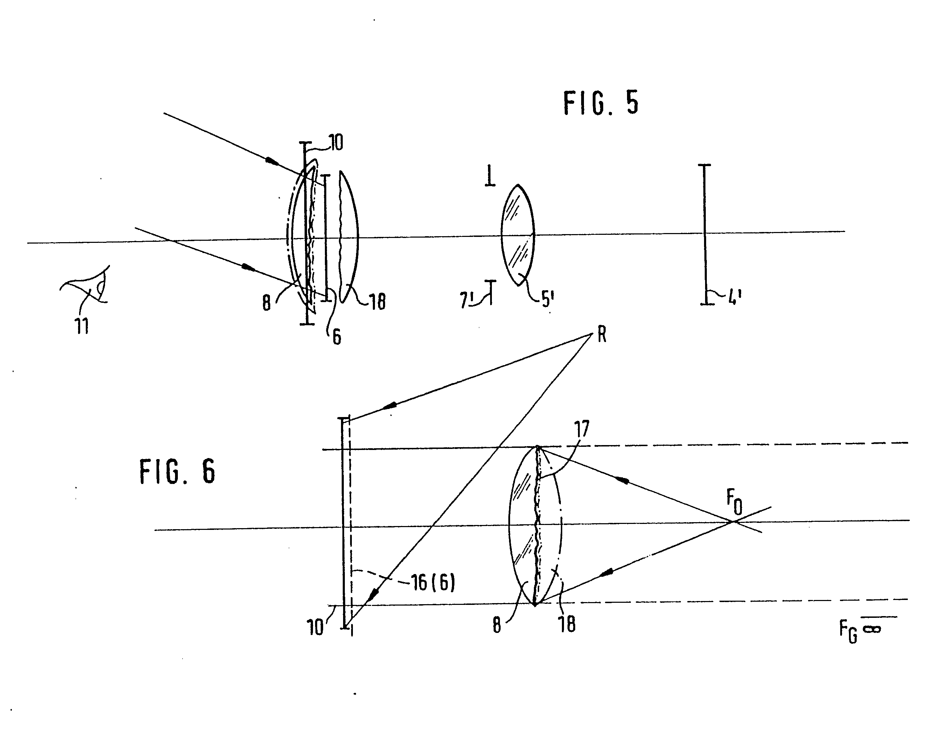

Die Fig. 5 zeigt die Rekonstruktion eines kombinierten Hologramms, das in folgender Weise aufgenommen worden ist: Das Phasenobjekt 18 ist unmittelbar vor der Hologrammebene 6, also in der Austrittsluke, angeordnet, wo sich Phasenstörungen nur gering auf die Aufzeichnung des Amplitudenobjekts 4' auswirken. Auf dem Hologramm erscheint also die fotografische Information, die aus der durch das Amplitudenobjekt 4' erzeugten Amplitudenstörung besteht, für das Auge noch gut sichtbar. Hingegen ist die Hologramminformation 7' durch die Phasenstörung 18 verzerrt aufgezeichnet worden, so daß bei der Rekonstruktion in dem der Rekonstruktion dienenden Referenzstrahl das Hologramm 10 angeordnet ist, das die Wirkung der zu der Phasenstörung 18 komplementären Phasenstörung 12 hat.

Die Herstellung des Entschlüsselungshologramms 10 ist in Fig. 6 dargestellt.

Die Aufnahme geschieht in der Weise, daß in dem aus dem Unendlichen kommenden Objektstrahl das Phasenobjekt 8 nach Fig. 2 als Hologramminformation angeordnet ist, die das Phasenobjekt 18 zu der Abbildungsoptik ergänzt. Das optische Element 8 ist somit das komplementäre Phasenobjekt, das das optische Element 18 gemäß Fig. 1 zu einer Abbildungslinse ergänzt.

Nach Fig. 6 wird das Hologramm als Transmissionshologramm aufgenommen. Das Hologramm 10 könnte aber auch als Reflexionshologramm hergestellt werden, wobei sich sodann der Referenzstrahl auf der gegenüberliegenden Seite der Hologrammebene befinden würde.

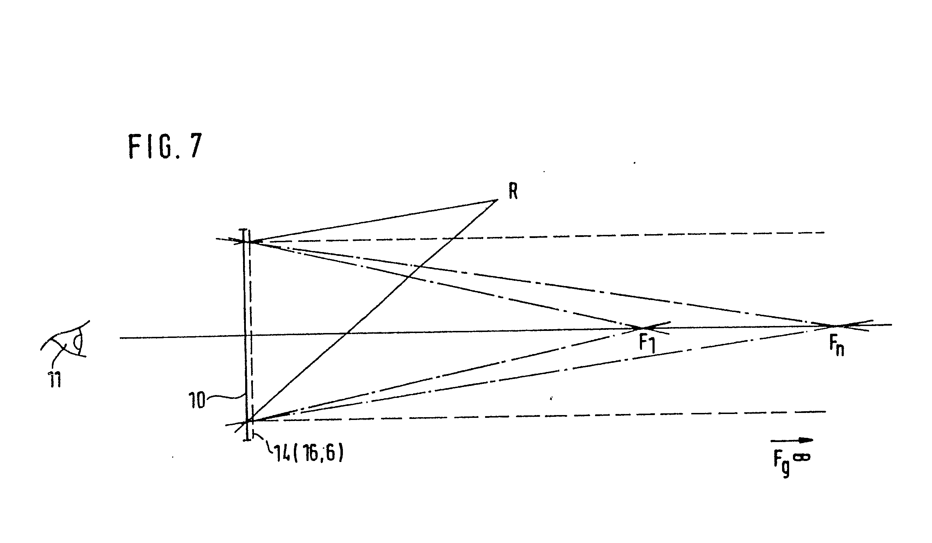

Bei der Rekonstruktion hat das gemäß Fig. 6 aufgenommene Hologramm 10 die aus Fig. 7 ersichtliche optische Wirkung.

**Patentansprüche**

1. Verfahren zur Aufnahme und Wiedergabe von Fotografien mit einem der Fotografie (4, 9) in der fotografischen Trägerschicht (6) überlagerten Hologramm, das beispielsweise nach dem Lippmann-Bragg-Verfahren durch aus derselben Lichtquelle (2) stammende Objekt- und Referenzstrahlen erzeugt wird und bei dem der Objektstrahl (1) die der Fotografie (4) entsprechende Amplitudeninformation derart enthält, daß dieses auf der der Hologrammebene entsprechenden Trägerschicht gleichzeitig abgebildet wird, bei dem die Aperturblende (7) der Abbildungsoptik (5) aus dem abzubildenden Objekt des Hologramms besteht, dadurch gekennzeichnet, daß in dem Objektstrahl (1) im Bereich zwischen der Aperturblende (7) und der Hologrammebene (6) ein vorbestimmte Phasenstörungen erzeugendes Phasenobjekt (18) angeordnet wird und daß bei der Rekonstruktion in die rekonstruierte Objektwelle ein Phasenobjekt (10, 8) angeordnet wird, das sich mit dem bei der Hologrammaufnahme verwendeten Phasenobjekt (18) zu einer Abbildungsoptik ergänzt.

2. Verfahren nach Anspruch 1, dadurch gekennzeichnet, daß das Phasenobjekt (18) aus mit einem Relief versehen. Brechungen erzeugenden Körper, beispielsweise einem Glaskörper, besteht, der sich durch einen entsprechend komplementären, Brechungen erzeugenden Körper zu einem Element, beispielsweise einer Linse, der Abbildungsoptik ergänzen läßt.

3. Verfahren nach Anspruch 1, dadurch gekennzeichnet, daß das Phasenobjekt (18) aus einer Fresnel'schen Zonenplatte oder mehreren Teilen verschiedener Fresnel'schen Zonenplatten besteht.

4. Verfahren nach einem der Ansprüche 1 bis 3, dadurch gekennzeichnet, daß das bei der Aufnahme verwendete Phasenobjekt (18) eine zweite Hologramminformation enthält.

5. Verfahren nach einem der Ansprüche 1 bis 4, dadurch gekennzeichnet, daß bei der Rekonstruktion des Hologramms (6) durch ein zu der Aperturblende (7) komplementäres Phasenobjekt (10, 12) die erste Hologramminformation eliminiert und nur die in dem auf der Aufnahme verwendeten Phasenobjekt (4, 9) gespeicherte Information sichtbar gemacht oder ausgewertet wird.

6. Verfahren nach einem der vorhergehenden Ansprüche, dadurch gekennzeichnet, daß beide Hologramminformationen derart aufeinander abgestimmt sind, daß sie sich bei ihrer Reproduktion zu einem Bild mit vorbestimmten Informationsinhalt ergänzen.

7. Verfahren nach einem der vorhergehenden Ansprüche, dadurch gekennzeichnet, daß das Phasenobjekt (9) oder das Amplitudenobjekt im Bereich der Hologrammebene (6) in dem Referenzstrahl (17) angeordnet wird.

8. Verfahren nach einem der vorhergehenden Ansprüche, dadurch gekennzeichnet, daß mindestens eine der Hologramminformationen ein von einem Rechner erzeugtes Hologramm ist, das über einen Sensor und einen Rechner wieder auslesbar ist.

9. Verfahren nach Anspruch 8, dadurch gekennzeichnet, daß das vom Rechner erzeugte Hologramm optisch auswertbar ist.

10. Verfahren nach einem der vorhergehenden Ansprüche, dadurch gekennzeichnet, daß mindestens eine der Hologramminformationen durch ein auf die Trägerschicht aufgestempeltes oder aufgeklebtes Hologramm abänderbar oder auslöschbar ist.

11. Verfahren nach einem der vorhergehenden Ansprüche, dadurch gekennzeichnet, daß eine der in einem der Hologramme codierten Information entsprechende Information in einem zusätzlichen Informationsträger gespeichert ist, um einen Echtheitsvergleich zu ermöglichen.

12. Verfahren nach Anspruch 11, dadurch gekennzeichnet, daß der zusätzliche Informationsträger ein Magnetstreifen oder dergleichen ist.

13. Verfahren nach einem der vorhergehenden Ansprüche, dadurch gekennzeichnet, daß die in der Trägerschicht codierten Hologramminformationen räumlicher Natur sind und die Auswertung in mehreren Ebenen erfolgt.

14. Nach dem Verfahren nach Anspruch 1 hergestellter codierter Informationsträger mit einem Substrat, das mit einer Fotografie versehen ist, die fotografische Information darstellt, und mit mindestens einem der Fotografie überlagerten Hologramm, das eine erste Hologramminformation darstellt, dadurch gekennzeichnet, daß das mindestens eine Hologramm eine der ersten Hologramminformation überlagerte, zweite Hologramminformation darstellt, die aus holografisch aufgezeichneter Phasenmodulationsinformation besteht.

15. Vorrichtung zur Durchführung des Verfahrens nach Anspruch 1 mit einem fotografischen Aufnahmesystem, das eine Aperturblende (7) aufweist und geeignet ist, die genannte Fotografie (4) auf dem Substrat zu erzeugen, und mit einem holografischen Aufnahmesystem, das geeignet ist, auf dem Substrat ein Hologramm zu erzeugen und einen die erste Hologramminformation darstellenden, optischen Modulator und eine Einrichtung zur Abgabe eines auf das Substrat fallenden Bezugsstrahlenbündels und zur Abgabe eines auf das Substrat fallenden und durch den optischen Modulator tretenden Objektstrahlenbündels aufweist, dadurch gekennzeichnet, daß im Strahlengang des Referenzstrahlenbündels (17) oder im Strahlengang des Objektbündels (1) zwischen dem die erste Hologramminformation (18) darstellenden optischen Modulator und der Hologrammebene (6) ein optischer Phasenmodulator zum Erzeugen von Phasenstörungen in einem darauffallenden Lichtstrahlenbündel angeordnet ist.

16. Vorrichtung nach Anspruch 15 zum Decodieren und Reproduzieren von Hologramminformationen mit einer Einrichtung zur Abgabe eines auf den Informationsträger fallenden Bezugsstrahlenbündels zwecks Erzeugung eines modulierten Objektstrahlenbündels, das durch das mindestens eine Hologramm dargestellte Information enthält, dadurch gekennzeichnet, daß im Strahlengang des modulierten Objektstrahlenbündels ein optischer Decoder angeordnet ist, der geeignet ist, aus dem modulierten Objektstrahlenbündel die erste oder zweite Hologramminformation selektiv zu beseitigen und ein decodiertes moduliertes Objektstrahlenbündel abzugeben, das die zweite bzw. erste Hologramminformation enthält.

**Claims**

1. A method for the recording and reproduction of photographs with a hologram superposed on the photograph (4, 9) in the photographic carrier layer (6) which hologram is produced for example according to the Lippmann-Bragg process by object and reference beams originating from the same light source (2), and wherein the object beam (1) contains the amplitude information corresponding to the photograph (4) in such a way that an image of the hologram is simultaneously formed on the carrier layer corresponding to the hologram plane, wherein the aperture stop (7) of the imaging optical element (5) consists of the object of the hologram to be imaged, characterized in that in the object beam (1), a phase object (18) creating predetermined phase interferences is arranged in the zone between the aperture stop (7) and the hologram plane (6), and that in the reconstruction, a phase object (10, 8) is arranged in the reconstructed object wave, which phase object combines with the phase object (18) used in the recording of the hologram, to form an imaging element.

2. A method according to claim 1, characterized in that the phase object (18) consists of a body provided with a relief producing refractions, for example a glass body which can be combined with a suitably complementary body producing refractions into an element, a lens for example, of the imaging optical element.

3. A method according to claim 1, characterized in that the phase object (18) consists of a Fresnel zone plate or several portions of various Fresnel zone plates.

4. A method according to one of claims 1 to 3, characterized in that the phase object (18) used in the recording contains a second hologram information set.

5. A method according to one of claims 1 to 4, characterized in that in the reconstruction of the hologram (6) by a phase object (10, 12) complementary to the aperture stop (7), the first hologram information is eliminated and only the information stored in the phase object (4, 9) used in the recording is made visible or is evaluated.

6. A method according to one of the preceding claims, characterized in that both hologram informations are correlated to each other in such a way that in their reproduction, they combine into an image with a predetermined information content.

7. A method according to one of the preceding claims, characterized in that the phase object (9) or the amplitude object are arranged in the range of the hologram plane (6) in the reference beam (17).

8. A method according to one of the preceding claims, characterized in that at least one of the hologram informations is a hologram produced by a computer which can be read out again by a sensor and a computer.

9. A method according to claim 8 characterized in that the hologram produced by the computer can be optically evaluated.

10. A method according to one of the preceding claims, characterized in that at least one of the hologram informations can be altered or erased by a hologram stamped on or bonded on to the carrier layer.

11. A method according to one of the preceding claims, characterized in that information corresponding to the information encoded in one of the holograms is stored in an additional information carrier in order to render possible a comparison establishing authenticity.

12. A method according to claim 11, characterized in that the additional information carrier is a magnetic strip or similar.

13. A method according to one of the preceding claims, characterized in that the hologram informations encoded in the carrier layer are of a spatial nature and that the evaluation is effected in several planes.

14. A coded information carrier with a substrate produced according to the method in accordance with claim 1, which substrate is provided with a photograph constituting photographic information, and with at least one hologram superposed on to the photograph, which hologram constitutes a first hologram information set, characterized in that at least the one hologram represents a second hologram information set superposed on to the first hologram information, which second hologram information set consists of holographically recorded phase modulation information.

15. An apparatus for implementing the method according to claim 1 with a photographic recording system which has an aperture stop (7) and is capable of producing the said photograph (4) on the substrate and with a holographic recording system which is capable of producing a hologram on the substrate and which has an optical modulator constituting the first hologram information and a device for the emission of a reference beam impinging on the substrate and for the emission of an object beam impinging on the substrate and passing through the optical modulator, characterized in that an optical phase modulator for generating phase interferences in an impinging light beam is arranged in the beam path of the reference beam (17) or in the beam path of the object beam (1) between the optical modulator constituting the first hologram information (18) and the hologram plane (6).

16. An apparatus according to claim 15 for the decoding and reproduction of hologram informations with a device for the emission of a reference beam impinging on the information carrier for generating a modulated object beam which contains information constituted by at least the one hologram, characterized in that an optical decoder is arranged in the beam path of the modulated object beam, which decoder is capable of selectively removing the first or second hologram information from the modulated object beam and of emitting a decoded modulated object beam which contains the second or first hologram information.

## Revendications

1. Procédé pour l'enregistrement et la reconstruction de photographies comportant un hologramme superposé à la photographie (4, 9) dans la couche de support (6) photographique, qui est produit, par exemple, d'après le procédé Lippmann-Bragg, par les rayons de l'objet et les rayons de référence provenant de la même source de lumière (2) et dans lequel le rayon de l'objet (1) comporte l'information d'amplitude correspondant à la photographie (4) de manière à ce que celle-là soit reproduite simultanément sur la couche support correspondant au plan de l'hologramme, et dans lequel le diaphragme d'ouverture (7) de l'optique de reproduction (59 consiste dans l'objet à reproduire de l'hologramme, caractérisé en ce que le rayon de l'objet (1) est associé dans la zone entre le diaphragme d'ouverture (7) et le plan de l'hologramme (6) à un objet de phase (18) produisant des perturbations de phase, que dans la reconstruction un objet de phase (10, 8) est disposé dans l'onde de l'objet reconstruite, qui se complète pour former une optique de reproduction de l'objet de phase (18) utilisé pour l'enregistrement de l'hologramme.

2. Procédé selon la revendication 1, caractérisé en ce que l'objet de phase (18) est constitué par un corps présentant un relief et produisant des réfractions, par exemple un corps en verre, qui peut être complété d'un corps complémentaire produisant des réfractions pour former un élément, par exemple une lentille de l'optique de reproduction.

3. Procédé selon la revendication 1, caractérisé en ce que l'objet de phase (18) est constitué par une lentille zonée de Fresnel ou plusieurs parties de différentes lentilles zonées de Fresnel.

4. Procédé selon l'une des revendications 1 à 3, caractérisé en ce que l'objet de phase (18), utilisé lors de l'enregistrement, comporte une deuxième information d'hologramme.

5. Procédé selon l'une des revendications 1 à 4, caractérisé en ce que la première information d'hologramme est éliminée lors de la reconstructions de l'hologramme (6) par un objet de phase (10, 12) complémentaire au diaphragme d'ouverture (7) et que seule l'information mémorisée dans l'objet de phase (4, 9) utilisé dans l'enregistrement est rendue visible ou est dépouillée.

6. Procédé selon l'une des revendications précédentes, caractérisé en ce que les deux informations d'hologramme concordent réciproquement de manière à ce qu'elles se complètent selon un contenu d'informations prédéterminées pour former une image lors de leur reproduction.

7. Procédé selon l'une des revendications précédentes, caractérisé en ce que l'objet de phase (9) ou l'objet d'amplitude est disposé dans la zone du plan de l'hologramme (6) dans le rayon de référence (17).

8. Procédé selon l'une des revendications précédentes, caractérisé en ce qu'au moins une des informations d'hologramme est un hologramme produit par un ordinateur qui peut être relu par l'intermédiaire d'un capteur et d'un ordinateur.

9. Procédé selon la revendication 8, caractérisé en ce que l'hologramme produit par l'ordinateur peut être traité optiquement.

10. Procédé selon l'une des revendications précédentes, caractérisé en ce qu'une information d'hologramme au moins peut être modifiée ou effacée par l'intermédiaire d'un hologramme appliqué par tampon ou collé sur la couche support.

11. Procédé selon l'une des revendications précédentes, caractérisé en ce qu'une information supplémentaire, correspondant à l'information codée dans l'un des hologrammes, est mémorisée pour permettre une comparaison d'authenticité.

12. Procédé selon la revendication 11, caractérisé en ce que le support d'information supplémentaire est une bande magnétique ou un moyen semblable.

13. Procédé selon l'une des revendications précédentes, caractérisé en ce que les informations d'hologramme, codées dans la couche support, sont de nature spaciale et que leur dépouillement se fait en plusieurs plans.

14. Support d'information codée produit d'après le procédé, selon la revendication 1, comportant un substrat qui est pourvu d'une photographie, qui représente des informations photographiques, et au moins un hologramme superposé à la photographie qui représente une première information d'hologramme, caractérisé en ce qu'au moins ledit hologramme représente une deuxième information d'hologramme superposée à la première information d'hologramme, la deuxième information consistant en un enregistrement holographique d'informations de modulation de phase.

15. Dispositif pour la réalisation du procédé selon la revendication 1, comportant un système d'enregistrement photographique qui présente un diaphragme d'ouverture (7) et est apte à produire ladite photographie (4) sur le substrat, et un système d'enregistrement holographique qui est apte à produire sur le substrat un hologramme, et un modulateur optique représentant la première information d'hologramme ainsi qu'un dispositif pour émettre un faisceau de rayons de référence projeté sur le substrat et pour émettre un faisceau de rayons de l'objet projeté sur le substrat et traversant un modulateur optique, caractérisé en ce que dans la trajectoire des rayons du faisceau de rayons de référence (17) ou dans la trajectoire de rayons du faisceau de l'objet (1) est disposé, entre le modulateur optique représentant la première information d'hologramme (18) et le plan d'hologramme (6), un modulateur de phase optique pour produire des perturbations de phase dans un faisceau de rayons de lumière le frappant.

16. Dispositif selon la revendication 15, pour décoder et reproduire des informations d'hologramme avec un dispositif pour émettre un faisceau de rayons de référence projeté sur le support d'information dans le but de produire un faisceau de rayons d'objet modulés qui comporte l'information représentant ledit hologramme au moins, caractérisé en ce que, dans la trajectoire des rayons du faisceau de rayons de l'objet modulés, un décodeur optique est disposé qui est apte à éliminer de manière sélective la première ou deuxième information d'hologramme du faisceau de rayons d'objet modulés et d'émettre un faisceau de rayons d'objet modulés décodés qui contient la deuxième ou première information d'hologramme.

FIG. 1

FIG. 2

FIG. 3

FIG. 4

# FIG. 5

# FIG. 6

EP 0 132 724 B1

FIG. 7